# EUROPÄISCHE PATENTSCHRIFT

(11) **EP 2 328 809 B1**
(45) Veröffentlichungstag und Bekanntmachung des Hinweises auf die Patenterteilung: **27.03.2013**
(21) Anmeldenummer: 09783333.9
(22) Anmeldetag: 23.09.2009
(51) Int. Cl.: B64D 37/32

(54) **SICHERHEITSSYSTEM ZUR VERMINDERUNG DER EXPLOSIONSGEFAHR EINES TREIBSTOFFTANKS**
SAFETY SYSTEM FOR REDUCING THE EXPLOSION RISK OF A FUEL TANK
SYSTEME DE SECURITE PERMETTANT DE REDUIRE LE RISQUE D'EXPLOSION D'UN RESERVOIR DE CARBURANT

(30) Priorität: 02.10.2008 DE 102008050373; 02.10.2008 US 194948 P
(43) Veröffentlichungstag der Anmeldung: 08.06.2011
(73) Patentinhaber: Airbus Operations GmbH, 21129 Hamburg (DE)
(72) Erfinder: STOLTE, Ralf-Henning, 22525 Hamburg-Bahrenfeld (DE); JANSEN VAN VUUREN, Herman, Wolverhampton WV2 4NY (GB)
(74) Vertreter: Kopf, Korbinian Paul
(86) Internationale Anmeldenummer: PCT/EP2009/062328
(87) Internationale Veröffentlichungsnummer: WO 2010/037677

(56) Entgegenhaltungen:
- DE-A1- 19 742 501
- FR-A- 1 109 506
- GB-A- 666 999
- US-A- 4 615 455
- US-A- 6 021 978

## Beschreibung

### TECHNISCHES GEBIET

Die Erfindung betrifft ein Sicherheitssystem zur Verminderung der Explosionsgefahr eines Treibstofftanks gemäß Anspruch 1, eine Verwendung eines derartigen Sicherheitssystems gemäß Anspruch 14, sowie ein Flugzeug mit einem Sicherheitssystem zur Verminderung der Explosionsgefahr gemäß Anspruch 15 US 6021978 A zeigt ein solches Sicherheitssystem mit den Merkmalen der Präambel des Anspruchs 1.

### HINTERGRUND DER ERFINDUNG

Generell entsteht in einem nicht vollständig gefüllten Treibstofftank an einer Grenzfläche zwischen Treibstoff und dem darüber befindlichen und mit Luft gefüllten Hohlraum die Gefahr, dass sich bei einer bestimmten Temperatur und einem entsprechenden Druck ein zündfähiges Gemisch aus Luft und Treibstoffgasen bildet. Durch einen Funken oder eine andere Zündquelle kann dieses Gemisch entzündet werden und zur Explosion des Treibstofftanks führen. Besonders dann, wenn es sich bei dem Treibstofftank um den Treibstofftank eines Flugzeugs handelt, hat dies katastrophale Auswirkungen und könnte zum Verlust des Flugzeugs mitsamt Besatzung und Passagieren führen.

Aus diesem Grunde werden beispielsweise von der FAA Richtlinien eingeführt, die ein Reduzieren eines Flugzeugs vorschreiben. Eine bekannte Lösung für dieses Problem liegt darin, ein Schutzgas in den Treibstofftank eines Flugzeugs einzuleiten, wobei das Schutzgas Sauerstoff abgereichert oder gänzlich inertisiert ist. Dies führt dazu, dass ein entstehendes Luft-Treibstoff-Gemisch in dem Treibstofftank aufgrund fehlenden Sauerstoffs nicht entflammbar ist. So ist aus der DE 10 2005 054885 A1 und der US 2007/0111060 A1 ein Sicherheitssystem zur Verminderung der Explosionsgefahr eines Treibstofftanks bekannt, bei dem Sauerstoff abgereicherte Luft aus einer im Flugzeug bereits installierten Brennstoffzelle austritt und in den Kraftstofftank geleitet wird. Jedoch erweist es sich hier als problematisch, dass das Schutzgas eine sehr hohe relative Luftfeuchtigkeit aufweist, die die Qualität des Treibstoffs beeinträchtigt. Zum Entfeuchten der Sauerstoff abgereicherten Luft sind Kondensationseinrichtungen notwendig. Das aus dem Schutzgas gewonnene Wasser kann später für andere Zwecke weiter verwendet werden. Durch die Kondensationseinrichtungen des Sicherheitssystems wird das Gesamtgewicht des Flugzeugs stark erhöht. Desweiteren werden beim Bodenaufenthalt des Flugzeugs Kerosindämpfe aus dem Ventilationssystem der Treibstofftanks in die Umgebung emittiert.

### ZUSAMMENFASSUNG DER ERFINDUNG

Aufgabe der Erfindung ist ein Sicherheitssystem zur Verminderung der Explosionsgefahr eines Treibstofftanks vorzuschlagen, das möglichst einfach aufgebaut ist und ein möglichst geringes Gewicht aufweist, aber dennoch zuverlässig die Explosionsgefahr im Treibstofftank reduziert. Eine weitere Aufgabe der Erfindung ist, eine Emission von Kerosindämpfen möglichst vollständig zu verhindern. Weiterhin könnte eine Aufgabe der Erfindung sein, bei Verwendung inertisierter Luft eine weniger aufwändige Kondensationseinrichtung vorzuschlagen.

Die Aufgabe wird gelöst durch ein Sicherheitssystem zur Verminderung der Explosionsgefahr eines Treibstofftanks gemäß den Merkmalen des unabhängigen Anspruchs 1.

Ein erster wichtiger Aspekt der Erfindung liegt darin, dass das erfindungsgemäße Sicherheitssystem einen Fluidbehälter mit einem Eintritt und einem Austritt für ein Fluid vorsieht, wobei der Fluidbehälter eine zumindest bereichsweise flexible Struktur aufweist und derart ausgestaltet ist, dass er sich in einem oberhalb vom Treibstoff befindlichen Hohlraum des Treibstofftanks positionieren lässt und bei Einströmen von Fluid den Hohlraum bis zu einer Oberseite des Treibstofftanks im Wesentlichen ausfüllt. Dies bedeutet, dass der üblicherweise in einem nicht vollständig gefüllten Treibstofftank vorhandene Hohlraum durch einen Körper in Form des erfindungsgemäßen Fluidbehälters eingenommen wird, der bevorzugt permanent von einem Fluid durchströmt wird. Das Fluid tritt in den Eintritt des Fluidbehälters ein und verlässt den Fluidbehälter durch den Austritt. Durch das Einströmen des Fluids und das aufgrund der begrenzten Durchflussöffnung des Austritts anfänglich verzögert ausfließende Fluid dehnt sich der Fluidbehälter aus, da er flexibel ist. Der Fluidbehälter kann sich derart ausdehnen, dass der Hohlraum im Wesentlichen vollständig durch ihn eingenommen wird. Dadurch wird per se verhindert, dass sich an der Grenzfläche des Treibstoffs zum Hohlraum hin ein brennfähiges Gemisch bildet, da praktisch kein freies Luftvolumen für eine derartige Gemischbildung vorhanden ist.

Eine Behördenforderung sieht einen Freiraum von 2% des Treibstofftankvolumens oberhalb des Treibstoffs vor, auf Grund potentieller volumetrischer Ausdehnung bei Anstieg der Temperatur. Sollte es auch bei Verwendung der vorliegenden Erfindung notwendig sein, einen solchen Freiraum vorzusehen, könnte dieser durch einen zusätzlichen schwammartigen Körper oder eine zusätzliche Isolierung ausgefüllt werden.

Betrifft die Erfindung einen Treibstofftank für ein Flugzeug, so ist durch die erfindungsgemäße Ausgestaltung des Fluidbehälters gewährleistet, dass thermische Ausdehnungseffekte nicht zu einer Zerstörung des Treibstofftanks oder des erfindungsgemäßen Fluidbehälters führen. Ein derartiger Druckaufbau, der zum Bersten des Treibstofftanks führen könnte, wird durch den offenen Austritt vermieden.

Zum Vermeiden eines Schadens des Treibstofftanks in Situationen, in denen nicht permanent durch den Eintritt in den erfindungsgemäßen Fluidbehälter das Fluid läuft, kann eine Beschädigung des Treibstofftanks und des erfindungsgemäßen Fluidbehälters dadurch vermieden werden, dass ein Überdruckventil an dem Eintritt und/oder Austritt des erfindungsgemäßen Fluidbehälters angeordnet ist. Alternativ dazu sind Berstscheiben denkbar, die nach einmaliger Aktivierung ersetzt werden müssen. Dies könnte jedoch eine besonders kostengünstige Lösung sein. Hierdurch wird es möglich, dass sich der Treibstoff beispielsweise bei leichter Erwärmung ausdehnt und der erfindungsgemäße Fluidbehälter in seiner Größe schrumpft.

Ein positiver Nebeneffekt ist die Tatsache, dass ein herkömmliches Tankentlüftungssystem durch das erfindungsgemäße Sicherheitssystem eliminiert werden könnte. Beim Betanken ist notwendig, dass Luft aus dem Treibstofftank entweicht, damit das Druckniveau innerhalb des Treibstofftanks auf dem Umgebungsniveau verbleibt und eine Beschädigung ausgeschlossen werden kann. Bei Verwendung des erfindungsgemäßen Sicherheitssystems könnte aus dem Austritt des Fluidbehälters genügend Luft ausströmen, die zum Schrumpfen des Fluidbehälters führt und dem in den Treibstofftank eintretenden Treibstoff ausreichend Raum schafft. Die bei einem herkömmlichen Entlüftungssystem üblicherweise austretenden Treibstoffdämpfe sind nicht mehr vorhanden, da die aus dem Fluidbehälter ausströmende Luft nicht direkt in Kontakt mit dem Treibstoff war.

Besonders bevorzugt weist der erfindungsgemäße Fluidbehälter eine im Wesentlichen ebene Oberseite und eine im Wesentlichen ebene Unterseite auf. Die ebene Unterseite dient dazu, den erfindungsgemäßen Fluidbehälter möglichst bündig mit der Treibstoffoberfläche in Verbindung zu bringen. Dadurch kann gewährleistet werden, dass die Menge der im Treibstofftank befindlichen freien Luft minimiert werden kann. Die ebene Oberseite könnte beispielsweise dann vorteilhaft sein, wenn auch der Treibstofftank eine im Wesentlichen ebene Oberfläche aufweist. Prinzipiell ist es aber auch besonders sinnvoll, die Oberseite und Unterseite aus einem elastischen Material wie Gummi oder einem anderen gummiartigen Material herzustellen, so dass sich die Unterseite und die Oberseite an entsprechende Flächen des Treibstofftanks leicht anpassen können.

Besonders bevorzugt weist der erfindungsgemäße Fluidbehälter mindestens eine flexible Seitenfläche als höhenvariable Verbindung zwischen der Oberseite und der Unterseite des Fluidbehälters auf. Dies könnte - falls gewünscht - eine entsprechend feste Gestaltung einer Oberseite und einer Unterseite des erfindungsgemäßen Fluidbehälters ermöglichen, während die Flexibilität des erfindungsgemäßen Fluidbehälters durch die Höhenvariabilität mindestens einer Seitenfläche gewährleistet wird. Als besonders günstig erweist sich ein balgförmiger Übergang, der nach Art einer Ziehharmonika einen erfindungsgemäßen Fluidbehälter mit einem sehr großen Volumenbereich bereitstellen kann.

Bevorzugt ist der Eintritt des erfindungsgemäßen Fluidbehälters dazu eingerichtet, mit der Fluidquelle verbunden zu werden. Diese Verbindung kann durch entsprechende Leitungen, Rohre und dergleichen erfolgen, wobei diese Verbindung nicht unveränderlich, konstant und starr sein muss, sondern auch durch entsprechende Schalt-, Wege-, Überdruck-, Rückschlag- und andere Ventile ergänzt werden kann.

Das erfindungsgemäße Sicherheitssystem weist außerdem zum gezielten Kondensieren von Wasser mindestens eine Kontaktfläche auf, die etwa durch die Unterseite des Fluidbehälters, die an Treibstoff angrenzt, realisiert sein könnte. Allgemein ist auch die Oberseite des Fluidbehälters dazu geeignet oder auch die Seitenflächen, sofern eine dieser Flächen mit einem kühlen Medium oder Material in Verbindung steht.

In dem erfindungsgemäßen Sicherheitssystem wird eine Fluidquelle eingesetzt, die vielfältiger Natur sein kann. In Betracht kommen aufgrund ihres geringen Gewichts vor allen Dingen gasförmige Fluide und ganz besonders Luft, wobei diese Luft bevorzugt Sauerstoff abgereichert oder gänzlich inertisiert sein könnte. Die Erfindung ist hierauf nicht beschränkt, sondern die Verwendung sämtlicher nicht brennbaren oder als Oxidator dienenden Gase oder gegebenenfalls auch Flüssigkeiten könnte in Betracht gezogen werden. Besonders bevorzugt handelt es sich bei der Fluidquelle jedoch um eine Brennstoffzelle, die bei ihrer Stromerzeugung eintretende Luft Sauerstoff abreichert und an einem Abgasanschluss ein relativ feuchtes Abgas bereitstellt. Dieses Abgas könnte in den erfindungsgemäßen Fluidbehälter eintreten, so dass im Treibstofftank weder ein freies Luftvolumen zum Bilden eines brennbaren Gemischs vorhanden ist, noch in einem separaten Körper in Form des erfmdungsgemäßen Fluidbehälters die Gefahr besteht, dass bei einer Leckage oder dergleichen Luft zum Bilden eines brennfähigen Gemischs in den Treibstofftank eintreten könnte.

Bei Verwendung von feuchter Luft als Fluid - beispielsweise aus einer Brennstoffzelle - ist es sinnvoll und bevorzugt, dass der erfindungsgemäße Fluidbehälter einen Ablauf zum Abführen von Wasser aufweist. Die Kontaktflächen des erfindungsgemäßen Fluidbehälters zu dem Treibstoff, zu der Oberseite des Treibstofftanks und möglicherweise zu den Seitenflächen des Treibstofftanks stellen kalte Wandungen bereit, an denen der in der eintretenden Luft enthaltene Wasserdampf kondensiert und sich beispielsweise an der Unterseite des erfindungsgemäßen Fluidbehälters sammelt. Durch Integration des Ablaufs kann dieses relativ saubere Wasser entnommen werden und beispielsweise bei Verwendung des erfindungsgemäßen Sicherheitssystems in einem Flugzeug zur weiteren Verwendung in einem Toilettenraum oder dergleichen zur Verfügung gestellt werden. Weiterhin könnte dieses Wasser zum aktiven Kühlen der Brennstoffzelle verwendet werden.

Weiterhin ist bevorzugt, dass das erfindungsgemäße Sicherheitssystem mindestens einen Sensor für unverbrannte Kohlenwasserstoffe aufweist, der bevorzugt am Austritt des erfindungsgemäßen Fluidbehälters angeordnet werden könnte. Alternativ dazu könnte der Sensor auch im Bereich des Ablaufs angeordnet sein und unverbrannte Kohlenwasserstoffe im Kondenswasser detektieren. Sollte der erfindungsgemäße Fluidbehälter einen Defekt in Form eines Lochs oder dergleichen aufweisen, durch das Treibstoff eintreten und das Fluid austreten könnte, würde beim Durchströmen des erfindungsgemäßen Fluidbehälters eine Gemischbildung eintreten, bei der sich ein gasförmiger Anteil des Treibstoffs mit dem ein- und wieder austretenden Fluid vermischt. Ist dies der Fall, kann dies durch den am Austritt befindlichen Sensor für unverbrannte Kohlenwasserstoffe detektiert werden, so dass eine entsprechende Warnung an eine Person ausgegeben werden kann.

Der erfindungsgemäße Fluidbehälter ist ferner bevorzugt an der Oberseite des Kraftstofftanks befestigt. Dies kann durch vielfältige Arten von Befestigungsmitteln geschehen, etwa durch Druckknöpfe, Klettverbindungen, Klemmverbindungen und dergleichen. Hierbei ist jedoch zu bedenken, dass der erfindungsgemäße Fluidbehälter möglichst so auszugestalten ist, dass er bei Aus- oder Nachrüstung eines Flugzeugs durch ein Mannloch beispielsweise in einen Tragflächentank eingebracht werden kann. Aufgrund der sehr beengten Verhältnisse und des Vorliegens von Treibstoffresten wäre es unvorteilhaft, aufwändige form- oder kraftschlüssige Verbindungen herzustellen, die mit unbequemen Vorarbeiten in Kraftstofftank einhergehen.

In einem erfindungsgemäßen Sicherheitssystem kann ein im Wesentlichen thermisch nicht isolierter Fluidbehälter unterhalb eines isolierten Fluidbehälters angeordnet sein, wobei der nicht isolierte Fludibehälter in direktem Kontakt mit dem Treibstoff steht. Der thermisch nicht isolierte Fluidbehälter weist einen Eintritt für das Fluid auf. Dies dient dazu, dass bei besonders günstigen Temperaturverhältnissen des Treibstoffs während des Flugs eine ideale Kondensationsbedingung genutzt werden kann. Die an den Treibstoff angrenzende Unterseite des nicht isolierten Fluidbehälters weist nahezu die gleiche Temperatur auf die der Treibstoff, wobei der Treibstoff aufgrund seiner relativ hohen Masse beim Abflug über eine relativ lange Zeit auf einem Temperaturniveau verbleibt, die noch keine Vereisung des Kondenswassers des unteren Fluidbehälters hervorruft.

Um ein Ausströmen des Fluids zu gewährleisten, kann der untere nicht isolierte Fluidbehälter mit dem oberen isolierten Fluidbehälter über einen Überströmkanal verbunden werden. Das Fluid tritt dann über den Austritt des oberen Fluidbehälters aus.

Zum Verhindern von Vereisungseffekten innerhalb des unteren und nicht isolierten Fluidbehälters ist bevorzugt ein Temperatursensor in dem Sicherheitssystem integriert, der die Temperatur des Kraftstoffs oder innerhalb des nicht isolierten Fluidbehälters erfasst. Erreicht die Temperatur ein kritisches Niveau von 0°C oder weniger wird bevorzugt über eine Steuereinrichtung ein Umschaltventil umgeschaltet, das mit dem Eintritt des oberen isolierten und des unteren nicht isolierten Fluidbehälters verbunden ist, so dass der Zustrom von Fluid in den nicht isolierten Fluidbehälter unterbunden wird und in den oberen, isolierten Fluidbehälter veranlasst wird.

Außerdem könnte ein weiterer zusätzlicher und nicht isolierter Fluidbehälter an die Innenfläche der Tankoberseite angrenzend integriert werden, so dass beim Einströmen von Fluid durch einen entsprechenden Eintritt in den zusätzlichen Fluidbehälter aufgrund des Wärmeeintrags eine Enteisungseinrichtung in ihrer Wirkung unterstützt werden, so dass eine beispielsweise elektrisch ausgeführte Enteisungseinrichtung einen geringeren Stromverbrauch aufweisen kann. Dies betrifft nicht nur einzelne Flugphasen, in denen eine Vereisungsgefahr besteht, sondern kann auch für eine Enteisung am Boden eingesetzt werden.

Generell ist an dieser Stelle darauf hinzuweisen, dass eine Isolierung der Fluidbehälter sinnvoll ist, denn bei Anwendung des erfindungsgemäßen Sicherheitssystems in Verkehrsflugzeugen muss mit Umgebungstemperaturen von - 50°C im Flug gerechnet werden. Dies würde eine Vereisung von Wasserdampf und möglicherweise zur Verstopfung von Eintritten und Austritten verursachen.

Gemäß einem weiteren Aspekt der Erfindung weist das Sicherheitssystem eine Mehrzahl von Fluidbehältern auf, die beispielsweise in einer Mehrzahl von Treibstofftanks angeordnet werden können, um im Verbund die Explosionsgefahr eines Treibstofftankverbunds zu minimieren. Am Beispiel eines Flugzeugs ist es vorstellbar, dass erfindungsgemäße Fluidbehälter sowohl in Tragflächentanks als auch in zentralen Treibstofftanks eingesetzt und über eine oder mehrere gemeinsame Fluidquellen über ein Leitungssystem mit einem entsprechenden Fluid versorgt werden. In den Tragflächentanks könnten bevorzugt auch jeweils mehrere erfindungsgemäße Fluidbehälter eingesetzt werden, da durch die Größe der Treibstofftanks in modernen Langstreckenverkehrsflugzeugen oder dergleichen eine Integration eines einzigen, sehr großen erfindungsgemäßen Fluidbehälters in einen Tragflächentank sehr aufwändig sein kann und eine ausreichende Lagestabilität nicht unbedingt zu jedem Zeitpunkt gesichert ist.

Die Aufgabe wird auch gelöst durch eine Verwendung und ein Flugzeug mit einem erfindungsgemäßen System zur Verminderung der Explosionsgefahr eines Treibstofftanks gemäß den Ansprüchen 14 und 15.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte. Es zeigen:
- Fig. 1a:: eine seitliche Schnittansicht einer Tragfläche eines Flugzeugs mit einem Treibstofftank und einem erfindungsgemäßen Sicherheitssystem;
- Fig. 1b:: eine vordere Schnittansicht einer Tragfläche mit einem Treibstofftank und einem erfindungsgemäßen Sicherheitssystem;
- Fig. 2:: eine schematische Ansicht eines erfindungsgemäßen Sicherheitssystems;
- Fig. 3:: eine weitere schematische Ansicht eines erfindungsgemäßen Sicherheitssystems; und
- Fig. 4:: ein Flugzeug mit Treibstofftanks und einem erfindungsgemäßen Sicherheitssystem.

### DETAILLIERTE BESCHREIBUNG EXEMPLARISCHER AUSFÜHRUNGSFORMEN

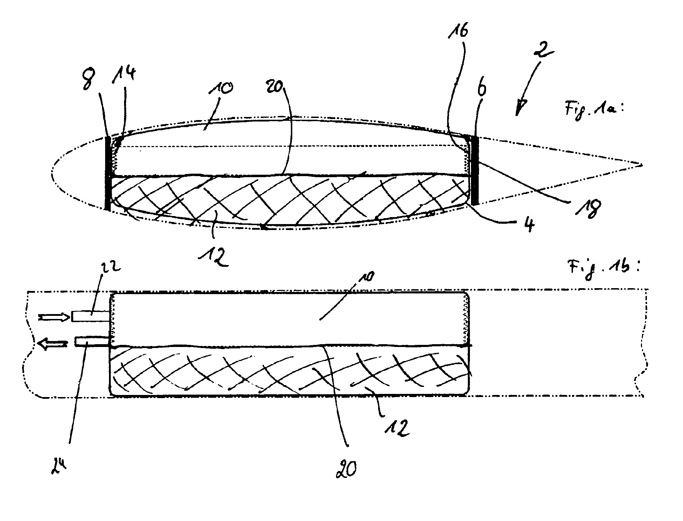

Fig. 1a zeigt einen Teil einer Tragfläche 2 eines Flugzeugs, die mit einem Treibstofftank 4 ausgerüstet ist, der durch eine erste Wandung 6 und eine zweite Wandung 8 zur Vorderkante und zur Hinterkante der Tragfläche 2 hin begrenzt wird. Innerhalb des Treibstofftanks 4 ist ein erfindungsgemäßer Fluidbehälter 10 angeordnet, der einen Hohlraum innerhalb des Treibstofftanks 4 oberhalb von Treibstoff 12 ausfüllt. Die Seitenflächen 14 und 16 des erfindungsgemäßen Fluidbehälters 10 sind höhenvariabel ausgestaltet und in der Form von Balgen bzw. balgförmigen Übergängen 18 realisiert.

Sinkt in der gezeigten Darstellung das Volumen des Treibstoffs 12, wandert der Treibstoffspiegel in der Zeichnungsebene nach unten. Gleichzeitig sinkt bei druckbeaufschlagtem erfindungsgemäßen Fluidbehälter 10 dessen Unterseite 20 ebenfalls nach unten, so dass sich das Volumen des Fluidbehälters 10 insgesamt vergrößert. Zwischen der Unterseite 20 und dem Treibstoff 12 befindet sich kein freies Luftvolumen, das zum Bilden eines brennfähigen Treibstoff-Luft-Gemischs führen könnte. Dadurch wird eine vom Volumen des Treibstoffs 12 unabhängige Explosionsverhinderung bewerkstelligt.

In Fig. 1b wird eine vordere Schnittansicht des Treibstofftanks 4 mit einem erfindungsgemäßen Fluidbehälter 10 gezeigt. Hier wird ersichtlich, dass an dem erfindungsgemäßen Fluidbehälter 10 ein Eintritt 22 und ein Austritt 24 angeordnet ist, durch den das Fluid in den Fluidbehälter 10 eintreten und wieder austreten kann. Durch den nicht vernachlässigbaren Strömungswiderstand am Austritt 24 kann sich innerhalb des erfindungsgemäßen Fluidbehälters 10 ein Druck aufbauen, der zu seiner Ausdehnung führt. Der Austritt 24 oder ein entsprechend nachfolgendes Ventil sind derart zu dimensionieren, dass der erfindungsgemäße Fluidbehälter 10 stets einen etwas höheren Druck als seine Umgebung aufweist, so dass er mit seiner Unterseite 20 dem Treibstoffspiegel möglichst mühelos folgen kann.

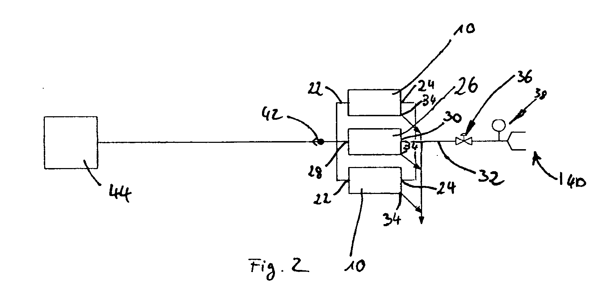

Fig. 2 zeigt eine schematische Ansicht des erfindungsgemäßen Sicherheitssystems in einem ersten Ausführungsbeispiel. Es werden zwei erfindungsgemäße Fluidbehälter 10 gezeigt, die einer rechten oder einer linken Tragfläche zuzuordnen sind. Ferner ist ein zusätzlicher Fluidbehälter 26 - beispielsweise in einem zentralen Kraftstofftank - in dem erfindungsgemäßen Sicherheitssystem angeordnet und weist einen Eintritt 28 auf, der mit den Eintritten 22 der übrigen Fluidbehälter 10 mit Sauerstoff abgereicherter Luft versorgt wird. Die durch die Fluidbehälter 10 und 26 durchströmende Luft verlässt durch Austritte 24 und 30 den entsprechenden Fluidbehälter 10 oder 26 und gerät in eine Abluftleitung 32, von wo aus sie über einen Drainagemast 40 oder dergleichen in die Umgebung ausströmen könnte.

Zusätzlich weisen die erfindungsgemäßen Fluidbehälter 10 und 26 jeweils einen Ablauf 34 auf, der sich bevorzugt an der jeweils tiefsten Stelle befindet und durch den das an den Wandungen der Fluidbehälter 10 und 26 auskondensierte Wasser entnommen werden kann. Zum Unterstützen der Kondensations- und Sammelwirkung könnten die Fluidbehälter 10 und 26 bevorzugt mit einer hydrophoben Beschichtung ausgerüstet sein, so dass auftreffender Wasserdampf kondensiert, rasch abperlt und sich möglichst vollständig unmittelbar an dem jeweiligen Ablauf 34 sammelt.

An die Abluftleitung 32 schließt sich ein Überdruckventil 36 an, das verhindern soll, dass ein Fluidbehälter 10 und 26 zu heftig mit Luft versorgt wird und sich über ein erträgliches Maß ausdehnt. Das Überdruckventil 36 muss derart eingestellt sein, dass ein Bersten des oder der Treibstofftanks zuverlässig verhindert wird, ohne dass die erfindungsgemäße Wirkung der Fluidbehälter 10 und 26 nachlässt.

Weiterhin befindet sich ein Sensor 38 für unverbrannte Kohlenwasserstoffe stromabwärts an der Abluftleitung 32, mit dem festgestellt werden kann, ob in der aus der Abluftleitung 32 austretenden Luft Kraftstoff enthalten ist, was Rückschlüsse über die Dichtheit der Fluidbehälter 10 bzw. 26 geben kann. Sollte dies der Fall sein, kann ein entsprechendes Signal erzeugt und zur Warnung beispielsweise im Cockpit eines Flugzeugs ausgegeben werden, wenn sich das erfindungsgemäße Sicherheitssystem in einem Flugzeug befindet.

Die Eintritte 22 bzw. 28 werden weiterhin über ein Rückschlagventil 42 von einer Brennstoffzelle 44 mit Sauerstoff abgereicherter Luft versorgt, so dass der in den Fluidbehältern 10 und 26 vorliegende Druck in allen denkbaren Situationen nicht durch die Eintritte abgebaut werden kann. Es ist in diesem Zusammenhang auch denkbar, dass als Fluidquelle auch ein Verbrennungsmotor bzw. dessen Abgasleitung oder dergleichen eingesetzt werden könnte.

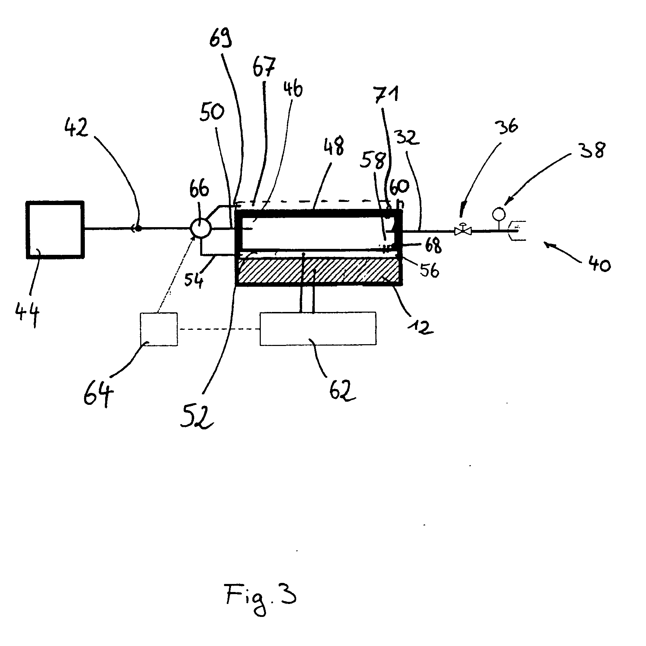

In Fig. 3 wird eine Abwandlung des erfindungsgemäßen Sicherheitssystems dargestellt. Es wird exemplarisch ein Fluidbehälter 46 gezeigt, der mit einer Isolierung 48 ausgerüstet ist. Die Isolierung ist derart dimensioniert, dass bei permanentem Zustrom von Luft in einen Eintritt 50 des Fluidbehälters 46 eine Temperatur von wenigstens 5°C innerhalb des Fluidbehälters 46 erreicht werden kann, auch bei Reiseflughöhe. Es befindet sich ein zweiter und relativ flacher Fluidbehälter 52 unterhalb des Fluidbehälters 46, der direkt an den Treibstoff 12 angrenzt und nicht isoliert ist. Dieser zweite Fluidbehälter 46 könnte bevorzugt zur Kondensation von Wasserdampf verwendet werden, da die Kontaktfläche zwischen dem zweiten Fluidbehälter 46 und dem Treibstoff eine ideale Wärmesenke darstellt. Dementsprechend weist der zweite Fluidbehälter 52 ebenfalls einen Eintritt 54 auf, durch den Luft in den zweiten Fluidbehälter 52 eingeleitet werden kann, wo dann eine Kondensation des Wasserdampfs eintritt und das Kondenswasser zu einem Ablauf 56 geleitet wird. Die eingeströmte Luft kann mittels eines Überströmkanals 58 in Form eines oder mehrerer Schläuche oder anders gearteter Leitungen in den oberen Fluidbehälter 46 überströmen und dort durch den Austritt 60 in die Abluftleitung 32 geraten.

Zum Schutz vor Vereisung bei abkühlendem Treibstoff während des Flugs ist ein Temperatursensor 62 in den unteren zweiten Fluidbehälter 52 und/oder in den Treibstofftank integriert, der bei Erreichen oder Unterschreiten einer Temperatur von 0°C über eine Steuereinheit 64 ein Umschalten eines Umschaltventils 66 veranlasst. Dies führt dazu, dass bei Temperaturen von 0°C oder weniger nur der obere, isolierte Fluidbehälter 46 mit Luft aus der Luftquelle beaufschlagt wird. Anfallendes Kondenswasser wird aus einem Ablauf 68 entnommen. Sollte jedoch die Temperatur höher als 0°C sein, wird die Luft durch den unteren, zweiten und nicht isolierten Fluidbehälter 52 geleitet, wo idealere Kondensationsbedingungen herrschen. Hierdurch wird die Wassergewinnung durch Kondensation deutlich verbessert.

Zusätzlich könnte ein weiterer zusätzlicher nicht isolierter Fluidbehälter 67 an einer Oberseite des Tanks 4 angeordnet werden, so dass der Wärmeeintrag bei Verwendung einer Brennstoffzelle als Fluidquelle eine Enteisungsvorrichtung unterstützt werden könnte. Hierfür weist der zusätzliche Fluidbehälter 67 einen Eintritt 69 auf, sowie einen Überströmkanal 71 dem darunter befindlichen Fluidbehälter 46. Ein Eintritt des zusätzliche Fluidbehälters 67 könnte ebenfalls mit dem Umschaltventil 66 verbunden sein, so dass wie analog zu den vorangehend geschilderten Ausführungen ein Vereisungsschutz gegeben ist.

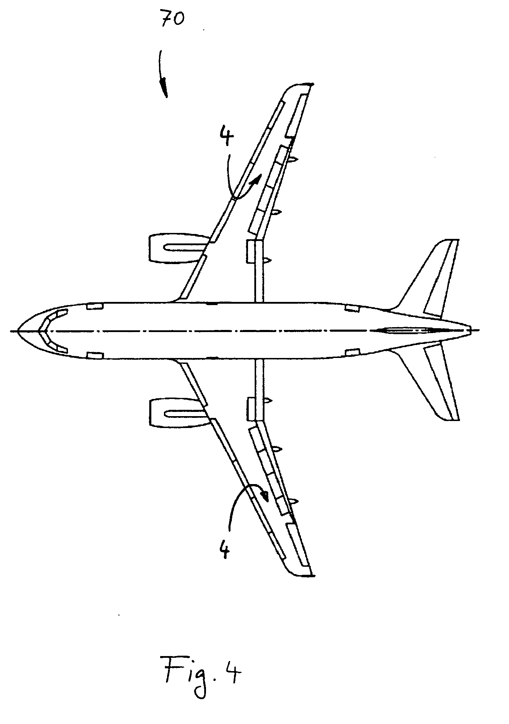

In Fig. 4 wird schließlich ein modernes Verkehrsflugzeug 70 gezeigt, in dem sich mehrere Treibstofftanks befinden und die mit dem erfindungsgemäßen Sicherheitssystem ausgerüstet sind.

Die ausgeführten Beispiele dienen lediglich der Verdeutlichung der erfindungsgemäßen Zusammenhänge und sind nicht als Beschränkung der Erfindung oder des Schutzumfangs zu verstehen. Vielmehr kann das erfindungsgemäße Prinzip auch auf Treibstofftanks angewendet werden, die sich nicht in Flugzeugen oder sogar nicht einmal innerhalb von Fahrzeugen befinden, ohne auf die erfindungsgemäßen Vorteile verzichten zu müssen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichen

- 2: Tragfläche
- 4: Treibstofftank
- 6: hintere Wand des Treibstofftanks
- 8: vordere Wand des Treibstofftanks
- 10: Fluidbehälter
- 12: Treibstoff
- 14: Seitenfläche des Fluidbehälters
- 16: Seitenfläche des Fluidbehälters
- 18: balgförmiger Übergang
- 20: Unterseite des Fluidbehälters
- 22: Eintritt
- 24: Austritt
- 26: Fluidbehälter
- 28: Eintritt
- 30: Austritt
- 32: Abluftleitung
- 34: Ablauf
- 36: Überdruckventil
- 38: Sensor für unverbrannte Kohlenwasserstoffe
- 40: Drainage-Mast
- 42: Rückschlagventil
- 44: Brennstoffzelle
- 46: Fluidbehälter (isoliert)
- 48: Isolierung
- 50: Eintritt
- 52: Fluidbehälter (nicht isoliert)
- 54: Eintritt
- 56: Ablauf
- 58: Überströmkanal
- 60: Austritt
- 62: Temperatursensor
- 64: Steuereinheit
- 66: Umschaltventil
- 67: zusätlicher Fluidbehälter
- 68: Austritt
- 69: Eintritt
- 70: Flugzeug
- 71: Überströmkanal

## Patentansprüche

1. Sicherheitssystem zur Verminderung der Explosionsgefahr eines Treibstofftanks (4), aufweisend
- mindestens eine Fluidquelle,
- mindestens einen Fluidbehälter (10, 26, 46, 52, 67) mit einem Eintritt (22, 50, 54) und einem Austritt (24, 56, 68) für ein Fluid, wobei der Fluidbehälter (10, 26, 46, 52, 67) eine zumindest bereichsweise flexible Sruktur aufweist und derart ausgestaltet ist, dass er sich in einem oberhalb von Treibstoff (12) befindlichen Hohlraum des Treibstoffanks (4) positionieren lässt und bei Einströmen von Fluid den Hohlraum bis zu einer Oberseite Treibstofftanks (4) im Wesentlichen ausfüllt, dadurch gehennzeichet, daß das Sichercheitssystem zusätzlich
- einen Ablauf (34, 56) zum Abführen von Wasser und
- mindestens einen Sensor für unverbrannte Kohlenwasserstoffe (38) an einem
- Austritt (24, 56, 68) und/oder im Bereich eines Ablaufs (34, 56) aufweist.

2. Sicherheitssystem nach Anspruch 1, wobei der Fluidbehälter (10, 26, 46, 52, 67) mindestens eine flexible Seitenfläche (14, 16) als höhenvariable Verbindung zwischen einer Oberseite und einer Unterseite (20) des Fluidbehälters (10, 26, 46, 52) aufweist.

3. Sicherheitssystem nach Anspruch 1 oder 2,
wobei der Fluidbehälter (10, 26, 46, 52) zwischen seiner Oberseite und seiner Unterseite (20) einen im Wesentlichen balgförmigen Übergang (18) aufweist.

4. Sicherheitssystem nach einem der vorhergehenden Ansprüche, wobei der Eintritt (22, 50, 54) dazu eingerichtet ist, mit der Fluidquelle verbunden zu werden.

5. Sicherheitssystem nach einem der vorhergehenden Ansprüche, wobei der Fluidbehälter (10, 26, 46, 52, 67) mindestens eine Kontaktfläche zum gezielten Kondensieren von Wasser aufweist.

6. Sicherheitssystem nach einem der vorhergehenden Ansprüche, wobei die Fluidquelle Sauerstoff angereicherte Luft bereitstellt.

7. Sicherheitssystem nach einem der vorhergehenden Ansprüche, wobei der Fluidbehälter (10, 26, 46, 52, 67) an der Oberseite des Treibstofftanks (4) befestigt ist.

8. Sicherheitssystem nach einem der vorhergehenden Ansprüche, wobei ein thermisch im Wesentlichen nicht isolierter Fluidbehälter (52) in Kontakt mit dem Treibstoff (12) unterhalb eines isolierten Fluidbehälters (46) angeordnet ist, wobei der thermisch nicht isolierte Fluidbehälter (52) einen Eintritt für das Fluid aufweist.

9. Sicherheitssystem nach Anspruch 8, wobei der nicht isolierte Fluidbehälter (52) über einen Überströmkanal (58) mit dem isolierten Fluidbehälter (46) verbunden ist, so dass in den nicht isolierten Fluidbehälter (52) einströmendes Fluid über den isolierten Fluidbehälter (46) ausströmen kann.

10. Sicherheitssystem nach einem der vorhergehenden Ansprüche, wobei ein thermisch im Wesentlichen nicht isolierter zusätzlicher Fluidbehälter (67) in Kontakt mit der Oberseite eines als Tragflächentank eines Flugzeugs ausgeführten Treibstofftanks (4) zum Unterstützen einer Enteisungsvorrichtung angeordnet ist.

11. Sicherheitssystem nach einem der vorhergehenden Ansprüche, wobei die Unterseite (20) und die Oberseite des Fluidbehälters (10, 26, 46, 52, 67) aus einem elastischen Material gebildet ist, so dass sich die Unterseite (20) und die Oberseite des Fluidbehälters (10, 26, 46, 52, 67) an die Form des Treibstofftanks (4) anpassen.

12. Sicherheitssystem nach Anspruch 8 oder 9, ferner aufweisend einen Temperatursensor (62) zum Erfassen der Temperatur in dem Treibstofftank (4) und/oder in dem nicht isolierten Fluidbehälter (52, 67), wobei bei Erreichen oder Unterschreiten einer erfassten Temperatur von 0°C ein Umschaltventil (66) einen Zustrom von Fluid in den nicht isolierten Fluidbehälter (52, 67) unterbricht und einen Zustrom von Fluid in den isolierten Fluidbehälter (46) veranlasst.

13. Sicherheitssystem nach einem der vorhergehenden Ansprüche, aufweisend eine Mehrzahl von Fluidbehältern (10, 26, 46, 52, 67), deren Eintritte (22, 50, 54, 69) über ein Leitungssystem mit einer oder mehreren gemeinsamen Fluidquellen verbunden sind.

14. Verwendung eines Sicherheitssystems nach einem der Ansprüche 1-13 in einem Flugzeug (70).

15. Flugzeug (70) mit mindestens einem Treibstofftank (4) und mindestens einem Sicherheitssystem nack Anspruch 1

## Claims

1. A safety system for reducing the explosion risk of a fuel tank (4), comprising
- at least one fluid source and
- at least one fluid container (10, 26, 46, 52, 67) with an inlet (22, 50, 54) and an outlet (24, 56, 68) for a fluid,
wherein the fluid container (10, 26, 46, 52, 67) has a structure that is flexible at least in some regions and is designed in such a manner that it is positionable in a hollow space of the fuel tank (4), which hollow space is situated above the fuel (12), with said fluid container (10, 26, 46, 52, 67) when fluid flows into the hollow space essentially occupying the space up to the top of the fuel tank (4),
**characterized in that** the safety system further comprises
- a drain (34, 56) for discharging water and
- at least one sensor for non-combusted hydrocarbons (38) on an outlet (24, 56, 68) and/or in the region of a drain (34, 56).

2. The safety system of claim 1, wherein the fluid container (10, 26, 46, 52, 67) comprises at least one flexible lateral surface (14, 16) as a variable-height connection between the top and the bottom (20) of the fluid container (10, 26, 46, 52).

3. The safety system of claim 1 or 2,
wherein the fluid container (10, 26, 46, 52) between its top and its bottom (20) comprises an essentially bellows-like transition (18).

4. The safety system of any one of the preceding claims, wherein the inlet (22, 50, 54) is adapted for being connected to the fluid source.

5. The safety system of any one of the preceding claims, wherein the fluid container (10, 26, 46, 52, 67) comprises at least one contact surface for the targeted condensing of water.

6. The safety system of any one of the preceding claims, wherein the fluid source provides oxygen-depleted air.

7. The safety system of any one of the preceding claims, wherein the fluid container (10, 26, 46, 52, 67) is attached at the top of the fuel tank (4).

8. The safety system of any one of the preceding claims, wherein a thermally essentially non-insulated fluid container (52) in contact with the fuel (12) is arranged underneath an insulated fluid container (46), wherein the thermally non-insulated fluid container (52) comprises an inlet for the fluid.

9. The safety system of claim 8, wherein the non-insulated fluid container (52) is connected by way of an overflow passage (58) to the insulated fluid container (46) so that fluid flowing into the non-insulated fluid container (52) can flow out by way of the insulated fluid container (46).

10. The safety system of any one of the preceding claims, wherein a thermally essentially non-insulated additional fluid container (67) is arranged so as to be in contact with the top of a fuel tank (4), designed as a wing tank of an aircraft, to assist a de-icing device.

11. The safety system of any one of the preceding claims, wherein the bottom (20) and the top of the fluid container (10, 26, 46, 52, 67) comprise an elastic material so that the bottom (20) and the top of the fluid container (10, 26, 46, 52, 67) conform to the shape of the fuel tank (4).

12. The safety system of claim 8 or 9, further comprising a temperature sensor (62) for acquiring the temperature in the fuel tank (4) and/or in the non-insulated fluid container (52, 67), wherein, if the acquired temperature reaches a level of 0 °C or below, a switching valve (66) interrupts an inflow of fluid into the non-insulated fluid container (52, 67) and causes an inflow of fluid into the insulated fluid container (46).

13. The safety system of any one of the preceding claims, comprising a multitude of fluid containers (10, 26, 46, 52, 67), whose inlets (22, 50, 54, 69) are connected to one or several shared fluid sources by way of a line system.

14. The use of a safety system of any one of claims 1-13 in an aircraft (70).

15. An aircraft (70) with at least one fuel tank (4) and at least one safety system according to claim 1.

## Revendications

1. Système de sécurité permettant de réduire le risque d'explosion d'un réservoir de carburant (4), présentant :
- au moins une source de fluide, et
- au moins un conteneur de fluide (10, 26, 46, 52, 67) avec une entrée (22, 50, 54) et une sortie (24, 56, 68) pour un fluide, le conteneur de fluide (10, 26, 46, 52, 67) présentant une structure au moins par zone et étant réalisé de telle sorte qu'il puisse être positionné dans un espace creux du réservoir de carburant (4) se trouvant au-dessus du carburant (12) et remplissant essentiellement, lors de l'afflux de fluide, l'espace creux jusqu'à une face supérieure du réservoir de carburant (4),
**caractérisé par le fait que** le système de sécurité présente en outre:
- une évacuation (34, 56) pour évacuer l'eau, et
- au moins un capteur pour hydrocarbures non brûlés (38) au niveau d'une sortie (24, 56, 68) et/ou dans la zone d'une évacuation (34, 56).

2. Système de sécurité selon la revendication 1, le conteneur de fluide (10, 26, 46, 52, 67) présentant au moins une surface latérale flexible (14, 16) comme raccordement à hauteur variable entre une face supérieure et une face inférieure (20) du conteneur de fluide (10, 26, 46, 52).

3. Système de sécurité selon la revendication 1 ou 2, le conteneur de fluide (10, 26, 46, 52) présentant entre sa face supérieure et sa face inférieure (20) un passage (18) essentiellement en forme de soufflet.

4. Système de sécurité selon l'une des revendications précédentes, l'entrée (22, 50, 54) étant agencée pour être raccordée à la source de fluide.

5. Système de sécurité selon l'une des revendications précédentes, le conteneur de fluide (10, 26, 46, 52, 67) présentant au moins une surface de contact pour la condensation ciblée de l'eau.

6. Système de sécurité selon l'une des revendications précédentes, la source de fluide mettant à disposition de l'air enrichi en oxygène.

7. Système de sécurité selon l'une des revendications précédentes, le conteneur de fluide (10, 26, 46, 52, 67) étant fixé sur la face supérieure du réservoir de carburant (4).

8. Système de sécurité selon l'une des revendications précédentes, un conteneur de fluide (52) thermiquement essentiellement non isolé étant disposé en contact avec le carburant (12) sous un conteneur de fluide (46) isolé, le conteneur de fluide (52, 67) thermiquement non isolé présentant une entrée pour le fluide.

9. Système de sécurité selon la revendication 8, le conteneur de fluide (52) non isolé étant raccordé par l'intermédiaire d'un canal de décharge (58) au conteneur de fluide (52) isolé, de telle sorte que du fluide affluant dans le conteneur de fluide (52) non isolé puisse sortir par le conteneur de fluide (46) isolé.

10. Système de sécurité selon l'une des revendications précédentes, un conteneur de fluide (67) supplémentaire thermiquement essentiellement non isolé étant disposé en contact avec la face supérieure d'un réservoir de carburant (4) réalisé comme un réservoir d'aile d'un avion pour assister un dispositif de dégivrage.

11. Système de sécurité selon l'une des revendications précédentes, la face inférieure (20) et la face supérieure du conteneur de fluide (10, 26, 46, 52, 67) étant formées d'un matériau élastique, de telle sorte que la face inférieure (20) et la face supérieure du conteneur de fluide (10, 26, 46, 52, 67) s'adaptent à la forme du réservoir de carburant (4).

12. Système de sécurité selon la revendication 8 ou 9, présentant en outre un capteur de température (62) pour détecter la température dans le réservoir de carburant (4) et/ou dans le conteneur de fluide (52, 67) non isolé, une vanne d'inversion (66) interrompant, lors de l'atteinte ou du dépassement vers le bas d'une température détectée de 0°C, un afflux de fluide dans le conteneur de fluide (52, 67) non isolé et entraînant un afflux de fluide dans le conteneur de fluide (46) isolé.

13. Système de sécurité selon l'une des revendications précédentes, présentant une multitude de conteneurs de fluide (10, 26, 46, 52, 67), dont les entrées (22, 50, 54, 69) sont raccordées par l'intermédiaire d'un système de distribution avec une ou plusieurs sources de fluide communes.

14. Utilisation d'un système de sécurité selon l'une des revendications 1 à 13 dans un avion (70).

15. Avion (70) comportant au moins un réservoir de carburant (4) et au moins un système de sécurité selon la revendication 1.
